# EUROPEAN PATENT SPECIFICATION

(11) **EP 2 730 110 B1**
(45) Date of publication and mention of the grant of the patent: **11.01.2017**
(21) Application number: 12737968.3
(22) Date of filing: 03.07.2012
(51) Int. Cl.: H04W 8/00, H04W 84/18

(54) **METHODS AND APPARATUS FOR PROVIDING FLEXIBILITY IN PEER DISCOVERY RANGE AND FREQUENCY OF UPDATES**
VERFAHREN UND VORRICHTUNG ZUR VERLEIHUNG VON FLEXIBILITÄT BEI EINEM PEER-ENTDECKUNGSBEREICH UND DER FREQUENZ VON AKTUALISIERUNGEN
PROCÉDÉS ET DISPOSITIFS DESTINÉS À OFFRIR UNE CERTAINE SOUPLESSE DANS UNE PLAGE DE DÉCOUVERTE DE PAIRS ET UNE FRÉQUENCE DE MISES À JOUR

(30) Priority: 07.07.2011 US 201161505466 P; 12.12.2011 US 201113323270
(43) Date of publication of application: 14.05.2014
(73) Proprietor: Qualcomm Incorporated, San Diego, CA 92121-1714 (US)
(72) Inventor: WANG, Ying, San Diego, California 92121-1714 (US); SUBRAMANIAN, Sundar, San Diego, California 92121-1714 (US); WU, Xinzhou, San Diego, California 92121-1714 (US); RICHARDSON, Thomas J., San Diego, California 92121-1714 (US); LI, Junyi, San Diego, California 92121-1714 (US)
(74) Representative: Wegner, Hans
(86) International application number: PCT/US2012/045467
(87) International publication number: WO 2013/006652

(56) References cited:
- WO-A1-2009/158656
- WO-A1-2009/158663
- US-A1- 2010 202 400

## Description

### BACKGROUND

### Field

The present disclosure relates generally to communication systems, and more particularly, to providing flexibility in peer discovery range and frequency of updates.

### Background

The discovery range of a peer discovery (broadcast) message may be determined by the distribution of peer discovery resources utilized by wireless devices transmitting concurrently with the transmission of the peer discovery message and the signal to interference plus noise ratio (SINR) that is required to decode the peer discovery message. Because the required SINR is a fixed quantity based on the coding of the peer discovery message, the discovery range is largely influenced by the distribution of peer discovery resources. A method and an apparatus are needed to control the distribution of peer discovery resources to improve the discovery range.

WO 2009/158663 A1 relates to wireless communications devices which support multiple modes of peer discovery operation. In some embodiments, the multiple modes of peer discovery operation include different modes which are associated with different rates of transmitting peer discovery information. In some embodiments, the multiple modes of peer discovery operation include different modes which are associated with different rates of monitoring peer discovery information. In various embodiments, a communications device determines whether or not to switch between different peer discovery modes of operation as a function of proximity to a location of interest. Proximity determinations may be, and sometimes are, based upon geographic position comparisons. Alternatively or in addition, proximity determinations may be, and sometimes are, based upon received signal strength measurements.

### SUMMARY

The invention is defined in the independent claims. In an aspect of the disclosure, a method, a computer program product, and an apparatus are provided. The apparatus transmits a first peer discovery signal with a first periodicity in a first set of peer discovery resources. The apparatus determines an energy on an allocated peer discovery resource of a second set of peer discovery resources. The apparatus refrains from transmitting a second peer discovery signal in the second set of peer discovery resources when the energy is greater than a threshold. The apparatus transmits the second peer discovery signal in the second set of peer discovery resources with a second periodicity less than the first periodicity when the energy is less than the threshold.

### BRIEF DESCRIPTION OF THE DRAWINGS

FIG. 1 is a diagram illustrating an example of a hardware implementation for an apparatus employing a processing system.
FIG. 2 is a drawing of a wireless peer-to-peer communications system.
FIG. 3 is a diagram illustrating an exemplary time structure for peer-to-peer communication between the wireless devices.
FIG. 4 is a diagram illustrating an operation timeline of a superframe and a structure of a peer discovery / broadcast channel.
FIG. 5 is a diagram for illustrating an exemplary method for utilizing a first set of peer discovery resources and a second set of peer discovery resources.
FIG. 6 is a diagram for illustrating the first set of peer discovery resources and the second set of peer discovery resources within the context of the peer discovery resources illustrated in FIG. 4.
FIG. 7 is a diagram illustrating use of the first set of peer discovery resources and the second set of peer discovery resources by a wireless device.
FIG. 8 is another diagram illustrating use of the first set of peer discovery resources and the second set of peer discovery resources by a wireless device.
FIG. 9 is a diagram for illustrating how a wireless device may adjust the threshold for determining whether to transmit on an allocated peer discovery resource of the second set of peer discovery resources.
FIG. 10 is a flow chart of a method of wireless communication.
FIG. 11 is a conceptual block diagram illustrating the functionality of an exemplary apparatus.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of communication systems will now be presented with reference to various apparatus and methods. These apparatus and methods will be described in the following detailed description and illustrated in the accompanying drawing by various blocks, modules, components, circuits, steps, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on a computer-readable medium. The computer-readable medium may be a non-transitory computer-readable medium. A non-transitory computer-readable medium include, by way of example, a magnetic storage device (e.g., hard disk, floppy disk, magnetic strip), an optical disk (e.g., compact disk (CD), digital versatile disk (DVD)), a smart card, a flash memory device (e.g., card, stick, key drive), random access memory (RAM), read only memory (ROM), programmable ROM (PROM), erasable PROM (EPROM), electrically erasable PROM (EEPROM), a register, a removable disk, and any other suitable medium for storing software and/or instructions that may be accessed and read by a computer. The computer-readable medium may be resident in the processing system, external to the processing system, or distributed across multiple entities including the processing system. The computer-readable medium may be embodied in a computer-program product. By way of example, a computer-program product may include a computer-readable medium in packaging materials.

Accordingly, in one or more exemplary embodiments, the functions described may be implemented in hardware, software, firmware, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. Those skilled in the art will recognize how best to implement the described functionality presented throughout this disclosure depending on the particular application and the overall design constraints imposed on the overall system.

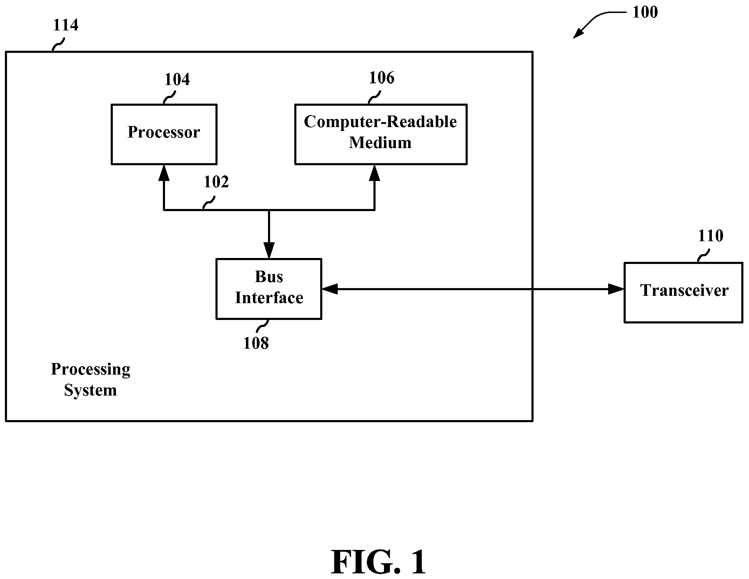

FIG. 1 is a conceptual diagram illustrating an example of a hardware implementation for an apparatus 100 employing a processing system 114. The processing system 114 may be implemented with a bus architecture, represented generally by the bus 102. The bus 102 may include any number of interconnecting buses and bridges depending on the specific application of the processing system 114 and the overall design constraints. The bus 102 links together various circuits including one or more processors and/or hardware modules, represented generally by the processor 104, and computer-readable media, represented generally by the computer-readable medium 106. The bus 102 may also link various other circuits such as timing sources, peripherals, voltage regulators, and power management circuits, which are well known in the art, and therefore, will not be described any further. A bus interface 108 provides an interface between the bus 102 and a transceiver 110. The transceiver 110 provides a means for communicating with various other apparatuses over a transmission medium.

The processor 104 is responsible for managing the bus 102 and general processing, including the execution of software stored on the computer-readable medium 106. The software, when executed by the processor 104, causes the processing system 114 to perform the various functions described *infra* for any particular apparatus. The computer-readable medium 106 may also be used for storing data that is manipulated by the processor 104 when executing software.

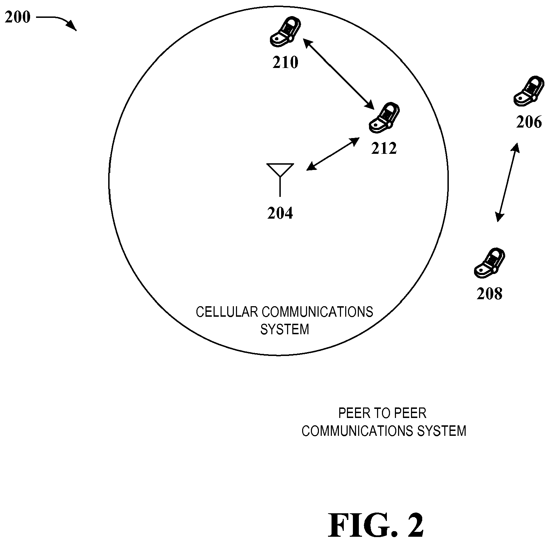

FIG. 2 is a drawing of an exemplary peer-to-peer communications system 200. The peer-to-peer communications system 200 includes a plurality of wireless devices 206, 208, 210, 212. The peer-to-peer communications system 200 may overlap with a cellular communications system, such as for example, a wireless wide area network (WWAN). Some of the wireless devices 206, 208, 210, 212 may communicate together in peer-to-peer communication, some may communicate with the base station 204, and some may do both. For example, as shown in FIG. 2, the wireless devices 206, 208 are in peer-to-peer communication and the wireless devices 210, 212 are in peer-to-peer communication. The wireless device 212 is also communicating with the base station 204.

The wireless device may alternatively be referred to by those skilled in the art as user equipment, a mobile station, a subscriber station, a mobile unit, a subscriber unit, a wireless unit, a wireless node, a remote unit, a mobile device, a wireless communication device, a remote device, a mobile subscriber station, an access terminal, a mobile terminal, a wireless terminal, a remote terminal, a handset, a user agent, a mobile client, a client, or some other suitable terminology. The base station may alternatively be referred to by those skilled in the art as an access point, a base transceiver station, a radio base station, a radio transceiver, a transceiver function, a basic service set (BSS), an extended service set (ESS), a Node B, an evolved Node B, or some other suitable terminology.

The exemplary methods and apparatuses discussed *infra* are applicable to any of a variety of wireless peer-to-peer communications systems, such as for example, a wireless peer-to-peer communication system based on FlashLinQ, VLinQ, WiMedia, Bluetooth, ZigBee, or Wi-Fi based on the IEEE 802.11 standard. To simplify the discussion, the exemplary methods and apparatus may be discussed within the context of VLinQ. However, one of ordinary skill in the art would understand that the exemplary methods and apparatuses are applicable more generally to a variety of other wireless peer-to-peer communication systems.

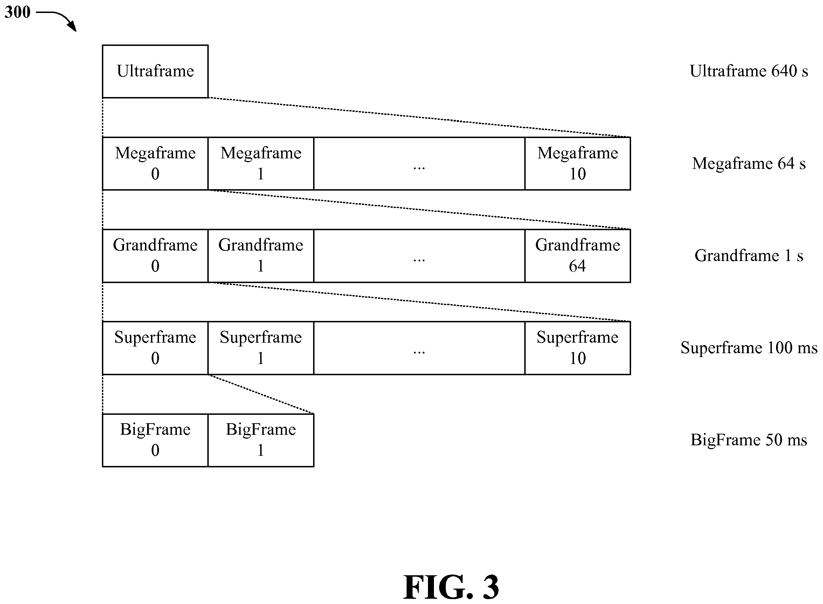

FIG. 3 is a diagram 300 illustrating an exemplary time structure for peer-to-peer communication between the wireless devices 100. An ultraframe is 640 seconds and includes ten megaframes. Each megaframe is 64 seconds and includes 64 grandframes. Each grandframe is one second and includes ten superframes. Each superframe is 100 ms and includes two bigframes. Each bigframe is 50 ms. A bigframe may also be referred to as a frame.

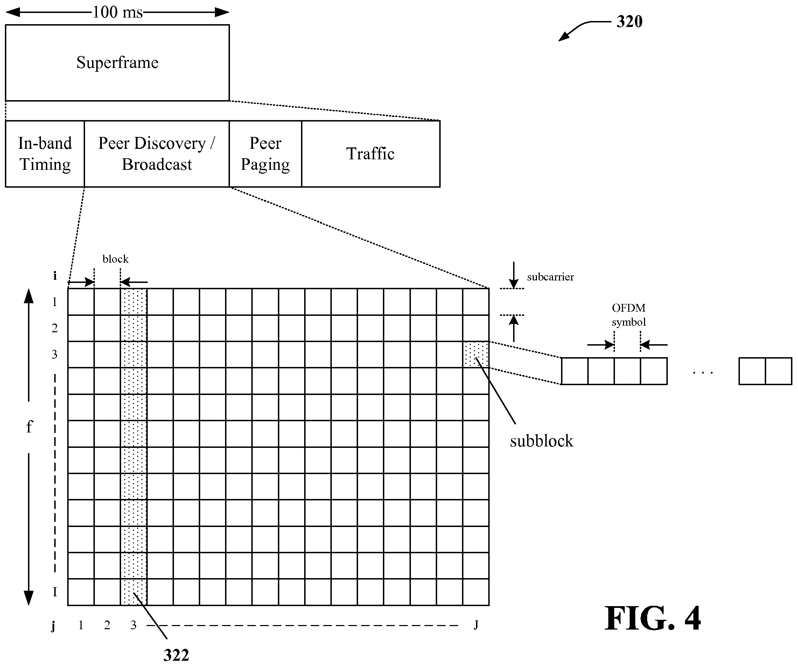

FIG. 4 is a diagram 320 illustrating an operation timeline of a superframe and an exemplary structure of a peer discovery / broadcast channel. The superframe includes an in-band timing channel, a peer discovery / broadcast channel, a peer paging channel, and a data traffic channel (TCCH). The peer discovery / broadcast channel may include J blocks (e.g., 75) for communicating peer discovery information. Each block may include I subblocks (e.g., 112). Each subblock may include a plurality of orthogonal frequency-division multiplexing (OFDM) symbols (e.g., 22) at the same subcarrier. Different blocks may correspond to different peer discovery resource identifiers (PDRIDs). For example, a first PDRID may correspond to the block at *j*=1, a second PDRID may correspond to the block at *j*=2, etc.

Upon power up, a wireless device listens to the peer discovery channel for a period of time and selects a PDRID based on a determined energy on each of the PDRIDs. For example, a wireless device may select a PDRID corresponding to the block 322 at *j*=3. The particular PDRID may map to other blocks in other superframes due to hopping. In the block associated with the selected PDRID, the wireless device transmits its peer discovery signal. In blocks unassociated with the selected PDRID, the wireless device listens for peer discovery signals transmitted by other wireless devices.

The wireless device may also reselect a PDRID if the wireless device detects a PDRID collision. That is, a wireless device may listen rather than transmit on its available peer discovery resource in order to detect an energy on the peer discovery resource corresponding to its PDRID. The wireless device may also detect energies on other peer discovery resources corresponding to other PDRIDs. The wireless device may reselect a PDRID based on the determined energy on the peer discovery resource corresponding to its PDRID and the detected energies on the other peer discovery resources corresponding to other PDRIDs.

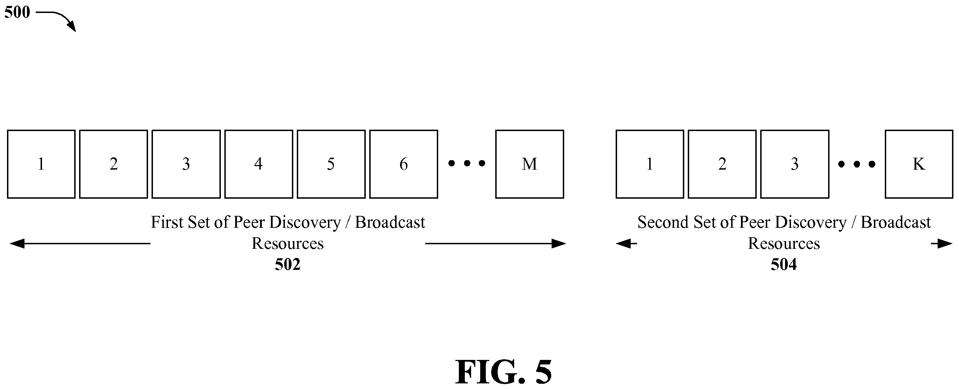

The periodic transmission of peer discovery messages is required in many systems. Channel access may be based on a distributed coordination function (DCF) algorithm in which each wireless device that desires to send a peer discovery signal senses the channel, and if it is not idle, picks a random backoff window and transmits when its back-off counter expires. The counter is decremented by one for each slot time the channel is sensed to be idle after a duration known as a DCF interframe space (DIFS) during which the channel is idle as well. Alternatively, as discussed *supra* in relation to FIG. 5, dedicated peer discovery resources may be obtained by a wireless device at startup. A wireless device may pick the peer discovery resource with the least amount of energy. The wireless device may continue to transmit in the same peer discovery resource until the wireless device detects much higher energy on its peer discovery resource.

The discovery range of a peer discovery message may be determined by the distribution of peer discovery resources utilized by wireless devices transmitting concurrently with the transmission of the peer discovery message and the SINR that is required to decode the peer discovery message. Because the required SINR is a fixed quantity based on the coding of the peer discovery message, the discovery range is largely influenced by the distribution of peer discovery resources.

In some systems, the distribution of the number of transmitters over the set of peer discovery resources may be roughly equal (e.g., due to an energy based resource selection algorithm), and therefore the set of transmitters operating in a given peer discovery resource may be spatially spread apart. In other systems, the distribution of transmitters over the peer discovery resources may be less balanced, and therefore in some cases the concurrent transmitters may be quite close to each other, making the decodable range really small in those circumstances. Due to the unbalanced use of resources, there is sometimes a possibility of having only one concurrently transmitting device. Having only one concurrently transmitting device improves the range of decodability for that transmitter, as the decodability is limited by thermal noise only (and not interference), and therefore the discovery range can be much larger. However, such behavior may occur only in some specific configurations and/or densities.

An exemplary method, discussed *infra*, distributes the transmitters roughly equally on a plurality of sets of peer discovery resources in order to provide differentiation in peer discovery range. According to the exemplary method, some resources are reserved for very few transmitters such that whenever the transmitters access these reserved resources, the transmitters can reach a larger number of receivers. Thus, the transmitters can have access to long range transmissions even when there are many transmitters within a small area (i.e., a dense scenario).

FIG. 5 is a diagram 500 for illustrating an exemplary method for utilizing a first set of typical peer discovery resources 502 and a second set of long-range peer discovery resources 504. The first set of peer discovery resources 502 are typical peer discovery resources in which wireless devices may periodically send peer discovery packets in a sequential manner. The first set of peer discovery resources 502 is a predefined resource reserved for typical broadcasts / peer discovery transmissions. The second set of peer discovery resources 504 is a predefined resource reserved for long-range broadcasts / peer discovery transmissions. The second set of peer discovery resources 504 allow for a peer discovery packet to be discovered at a longer range than the discovery range when transmitted in the first set of peer discovery resources 502.

As shown in FIG. 5, there are J peer discovery resources with M resources in the first set of peer discovery resources 502 and K resources in the second set of peer discovery resources 504, such that J=M+K. According to an exemplary method, a wireless device utilizes one peer discovery resource of the M resources within the first set of peer discovery resources 502 each cycle. In addition, the wireless device utilizes one peer discovery resource of the K resources within the second set of peer discovery resources 504 once every N cycles. Effectively, a set of wireless devices are distributed across the M resources within the first set of peer discovery resources 502 and across K*N resources within the second set of peer discovery resources 502 for N cycles.

A wireless device selects a typical peer discovery resource in the first set of peer discovery resources 502 with less energy compared to other peer discovery resources, even if the energy is much higher than the thermal noise level. Because a wireless device selects the peer discovery resource with the least energy, wireless devices sharing the same peer discovery resource are effectively as far away from each other as possible. However, as the density increases of wireless devices utilizing the first set of peer discovery resources 502, the distance between wireless devices concurrently utilizing the same peer discovery resources shrinks.

The long-range peer discovery resource to which a wireless device is allocated may be predefined based on the selected typical peer discovery resource. Alternatively, a wireless device may also select the long-range peer discovery resource in the second set of peer discovery resources 504. When selecting the long-range peer discovery resource, a wireless device may select the peer discovery resource with an energy comparable to a thermal noise level. However, the wireless device may refrain from transmitting on the selected long-range peer discovery resource when an energy on the peer discovery resource is greater than the thermal noise.

An example best demonstrates the exemplary method. Assume there are 2M wireless devices within range of each other. The 2M wireless devices are using the M typical peer discovery resources. Their peer discovery range is reduced because some of the wireless devices are using the same peer discovery resources as other wireless devices. The 2M wireless devices are allocated one of the K*N long-range peer discovery resources. If 2M ≤ K*N, then each wireless device could have its own long-range peer discovery resource. As such, if the M typical peer discovery resources are crowded, each of the 2M wireless devices will be able to transmit a peer discovery signal that can be detected at long range in the K*N long-range peer discovery resources.

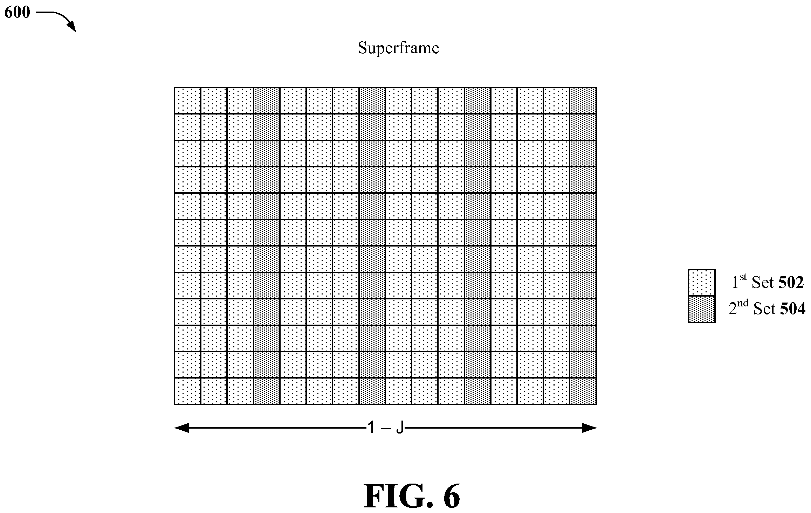

FIG. 6 is a diagram 600 for illustrating the first set of peer discovery resources 502 and the second set of peer discovery resources 504 within the context of the peer discovery resources illustrated in FIG. 4. The peer discovery resources include J blocks and M of those blocks may be allocated for the first set of peer discovery resources 502 and K of those blocks may be allocated for the second set of peer discovery resources 504. As shown in FIG. 6, J=16, M=12, K=4, and the K blocks are located every 4^{th} block. However, the K blocks may be allocated anywhere within the J blocks.

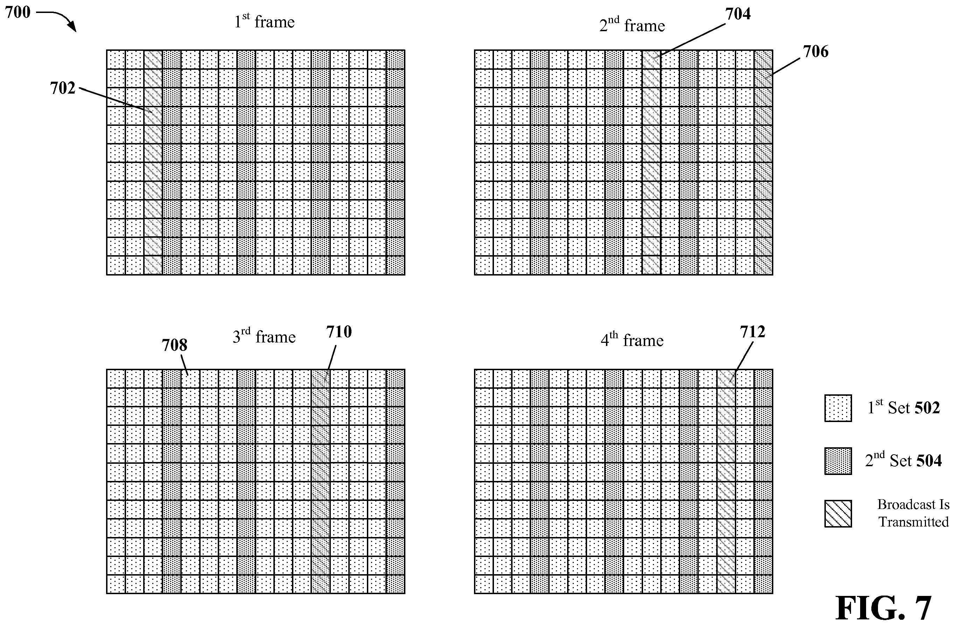

FIG. 7 is a diagram 700 illustrating use of the first set of peer discovery resources 502 and the second set of peer discovery resources 504 by a wireless device 100. In this example, the wireless device 100 is allocated a typical peer discovery resource each superframe (herein referred to as a "frame") and, because N=2, is allocated a long-range peer discovery resource every two frames. As shown in FIG. 7, in a first frame, the wireless device 100 is allocated the typical peer discovery resource 702 and transmits in that peer discovery resource. In a second frame, the wireless device 100 is allocated the typical peer discovery resource 704 and the long-range peer discovery resource 706 and transmits in both peer discovery resources. In a third frame, the wireless device 100 is allocated the typical peer discovery resource 708 and the long-range peer discovery resource 710, but transmits only in the long-range peer discovery resource 710. In the third frame, the wireless device 100 determined to refrain from transmitting in the typical peer discovery resource 708 because the typical peer discovery resource 708 is in the same frame as the utilized the long-range peer discovery resource 710. In a fourth frame, the wireless device 100 is allocated the typical peer discovery resource 712 and transmits in that peer discovery resource.

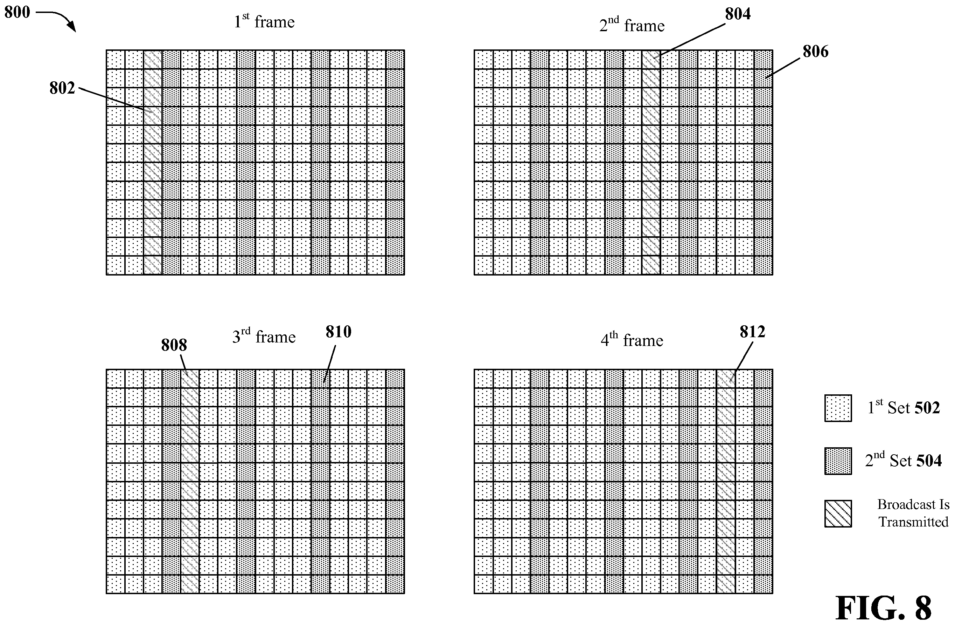

FIG. 8 is another diagram 800 illustrating use of the first set of peer discovery resources 502 and the second set of peer discovery resources 504 by a wireless device 100. In this example, the wireless device 100 is allocated a typical peer discovery resource each frame and, because N=2, is allocated a long-range peer discovery resource every two frames. As shown in FIG. 8, in a first frame, the wireless device 100 is allocated the typical peer discovery resource 802 and transmits in that peer discovery resource. In a second frame, the wireless device 100 is allocated the typical peer discovery resource 804 and the long-range peer discovery resource 806 and transmits in the typical peer discovery resource 804. The wireless device 100 refrains from transmitting in the long-range peer discovery resource 806 and determines an energy on the long-range peer discovery resource 806. Assume the determined energy is greater than a threshold. In a third frame, the wireless device 100 is allocated the typical peer discovery resource 808 and the long-range peer discovery resource 810, but transmits only in the typical peer discovery resource 808. The wireless device 100 refrains from transmitting in the long-range peer discovery resource 810, as the wireless device 100 determined that the energy on the long-range peer discovery resource 806 was greater than a threshold. In a fourth frame, the wireless device 100 is allocated the typical peer discovery resource 812 and transmits in that peer discovery resource.

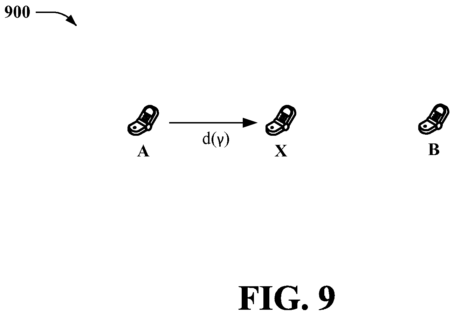

FIG. 9 is a diagram 900 for illustrating how a wireless device may adjust the threshold for determining whether to transmit on an allocated peer discovery resource of the second set of peer discovery resources 504. A wireless device may adjust the threshold for determining whether to utilize an allocated peer discovery resource of the second set of peer discovery resources 504 based on an SINR required to successfully receive the second peer discovery signal. When the required SINR increases, the wireless device may increase the threshold, and when the required SINR decreases, the wireless device may decrease the threshold. When the wireless device decreases the threshold, the wireless device is less likely to transmit in the second set of peer discovery resources 504, and when the wireless device increases the threshold, the wireless device is more likely to transmit in the second set of peer discovery resources 504. For example, consider two wireless devices A and B trying to reuse the same PDRID. Both transmit at the same power. Consider a receiver X between A and B and at a distance d from A. If the decodability threshold is *γ*, then let *d*(γ) describe the maximum distance at which A can be discovered. If *γ* is larger, *d*(*y*) is smaller. The reuse of the same PDRID by B is possible without affecting the best case discoverability of A. That is, even if B were to reuse the PDRID, wireless devices beyond *d*(*γ*) cannot hear A. If *γ* is increased, and *d*(*y*) is therefore decreased, A and B can be closer to each other and still use the same resource (i.e., B can reuse the resource even if the energy it observes is high).

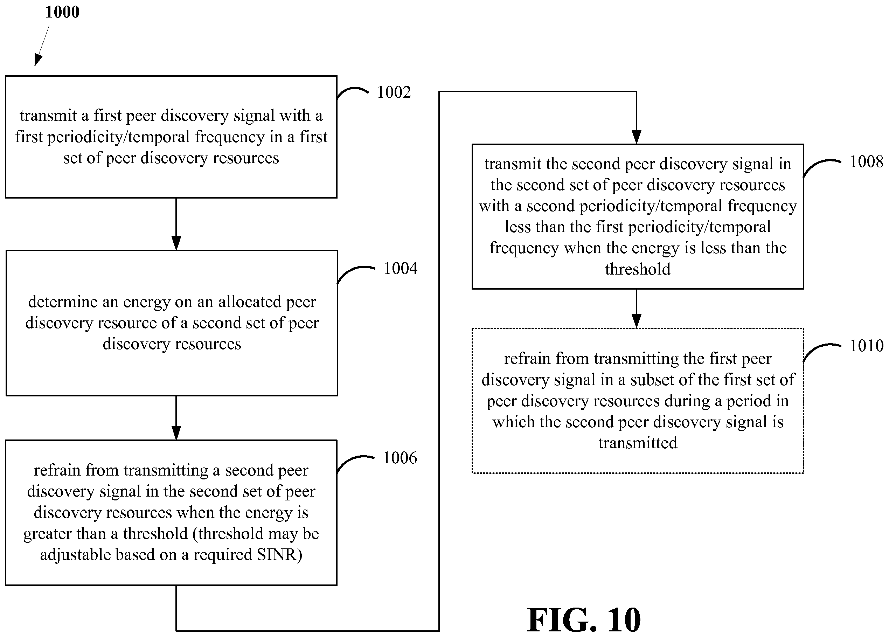

FIG. 10 is a flow chart 1000 of an exemplary method. The method may be performed by a wireless device. As shown in FIG. 10, the wireless device transmits a first peer discovery signal with a first periodicity / temporal frequency in a first set of peer discovery resources (1002). The wireless device determines an energy on an allocated peer discovery resource of a second set of peer discovery resources (1004). The wireless device refrains from transmitting a second peer discovery signal in the second set of peer discovery resources when the energy is greater than a threshold (1006). The wireless device transmits the second peer discovery signal in the second set of peer discovery resources with a second periodicity / temporal frequency less than the first periodicity / temporal frequency when the energy is less than the threshold (1008).

For example, referring again to FIG. 8, the wireless device transmits peer discovery signals in the typical peer discovery resources 802, 804, 808, 812 with a first temporal frequency of once every frame (temporal frequency = 1) in the first set of peer discovery resources 502. The wireless device determines an energy on the allocated peer discovery resource 806 of the second set of peer discovery resources 504. When the determined energy is greater than a threshold (e.g., thermal noise level), the wireless device refrains from transmitting on the peer discovery resource 810. When the determined energy is less than the threshold, the wireless device transmits on the peer discovery resource 810. The wireless device transmits on the second set of peer discovery resources 504 with a second temporal frequency of once every two frames (temporal frequency = 1/2). For example, had the wireless device not listened on the allocated peer discovery resource 806, the wireless device would have transmitted on both the peer discovery resources 806, 810, which is once every two frames. The second temporal frequency 1/2 is less than the first temporal frequency 1.

The second set of peer discovery resources may be utilized once every N periods. The value N may be greater than one. Once every N periods is the second periodicity / temporal frequency. A number of peer discovery resources in the second set of peer discovery resources multiplied by N may be greater than or equal to a number of peer discovery resources in the first set of peer discovery resources. For example, in FIG. 8, M=12 and K=4. If a wireless device utilizes the second set of peer discovery resources 504 once every four frames (N=4), then K*N (16) ≥ M (12).

The wireless device may refrain from transmitting the first peer discovery signal in a subset of the first set of peer discovery resources during a period in which the second peer discovery signal is transmitted (1010). For example, referring again to FIG. 7, the wireless device refrains from transmitting its peer discovery signal in the peer discovery resource 708 because the wireless device utilizes the peer discovery resource 710, which is in the same frame as the peer discovery resource 708.

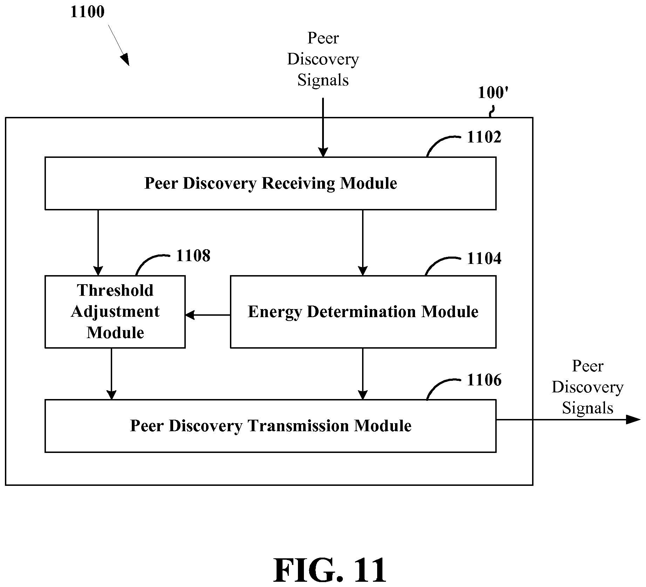

FIG. 11 is a conceptual block diagram 1100 illustrating the functionality of an exemplary apparatus 100'. The apparatus includes a peer discovery transmission module 1006 that is configured to transmit a first peer discovery signal with a first periodicity / temporal frequency in a first set of peer discovery resources 502. The apparatus further includes a peer discovery receiving module 1002 that is configured to receive peer discovery signals. The peer discovery receiving module 1002 communicates with an energy determination module 1004 that is configured to determine an energy on an allocated peer discovery resource of a second set of peer discovery resources 504. The peer discovery transmission module 1006 is configured to refrain from transmitting a second peer discovery signal in the second set of peer discovery resources 504 when the energy is greater than a threshold. In addition, the peer discovery transmission module 1006 is configured to transmit the second peer discovery signal in the second set of peer discovery resources 504 with a second periodicity / temporal frequency less than the first periodicity / temporal frequency when the energy is less than the threshold.

The second set of peer discovery resources may be utilized once every N periods in which once every N periods is the second periodicity / temporal frequency. A number of peer discovery resources in the second set of peer discovery resources multiplied by N may be greater than or equal to a number of peer discovery resources in the first set of peer discovery resources. The threshold may be based on an SINR required to successfully receive the second peer discovery signal. In such a configuration, the apparatus may further include a threshold adjustment module 1008 configured to increase the threshold when the required SINR increases, and to decrease the threshold when the required SINR decreases. The threshold adjustment module 1008 conveys the threshold information to the peer discovery transmission module 1006. The peer discovery transmission module 1006 may be further configured to refrain from transmitting the first peer discovery signal in a subset of the first set of peer discovery resources 502 during a period in which the second peer discovery signal is transmitted.

The apparatus may include additional modules that perform each of the steps of the algorithm in the aforementioned flow chart FIG. 9. As such, each step in the aforementioned flow chart FIG. 9 may be performed by a module and the apparatus may include one or more of those modules. The modules may be the processing system 114, or otherwise, the same or different programmable or dedicated hardware configured to perform the functionality associated with each of the modules.

Referring to FIG. 1 and FIG. 11, in one configuration, the apparatus 100/100' for wireless communication includes means for transmitting a first peer discovery signal with a first periodicity in a first set of peer discovery resources. The apparatus further includes means for determining an energy on an allocated peer discovery resource of a second set of peer discovery resources. The apparatus further includes means for refraining from transmitting a second peer discovery signal in the second set of peer discovery resources when the energy is greater than a threshold. The apparatus further includes means for transmitting the second peer discovery signal in the second set of peer discovery resources with a second periodicity less than the first periodicity when the energy is less than the threshold. The threshold may be based on an SINR required to successfully receive the second peer discovery signal. In such a configuration, the apparatus may further include means for increasing the threshold when the required SINR increases, and means for decreasing the threshold when the required SINR decreases. The apparatus may further include means for refraining from transmitting the first peer discovery signal in a subset of the first set of peer discovery resources during a period in which the second peer discovery signal is transmitted. The means may be the processing system 114 and/or one or more of the modules of the apparatus 100' configured to perform the functions recited by the aforementioned means.

It is understood that the specific order or hierarchy of steps in the processes disclosed is an illustration of exemplary approaches. Based upon design preferences, it is understood that the specific order or hierarchy of steps in the processes may be rearranged. The accompanying method claims present elements of the various steps in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Unless specifically stated otherwise, the term "some" refers to one or more. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed as a means plus function unless the element is expressly recited using the phrase "means for."

In the following, further examples are described to facilitate the understanding of the invention:
1. A method of wireless communication, comprising:
   transmitting a first peer discovery signal with a first periodicity in a first set of peer discovery resources;
   determining an energy on an allocated peer discovery resource of a second set of peer discovery resources;
   refraining from transmitting a second peer discovery signal in the second set of peer discovery resources when the energy is greater than a threshold; and
   transmitting the second peer discovery signal in the second set of peer discovery resources with a second periodicity less than the first periodicity when the energy is less than the threshold.
2. The method of example 1, wherein the second set of peer discovery resources are utilized once every N periods, said once every N periods being the second periodicity.
3. The method of example 2, wherein a number of peer discovery resources in the second set of peer discovery resources multiplied by N is greater than or equal to a number of peer discovery resources in the first set of peer discovery resources.
4. The method of example 1, wherein the threshold is based on a signal to interference plus noise ratio (SINR) required to successfully receive the second peer discovery signal.
5. The method of example 4, further comprising:
   increasing the threshold when the required SINR increases; and
   decreasing the threshold when the required SINR decreases.
6. The method of example 1, further comprising refraining from transmitting the first peer discovery signal in a subset of the first set of peer discovery resources during a period in which the second peer discovery signal is transmitted.
7. An apparatus for wireless communication, comprising:
   means for transmitting a first peer discovery signal with a first periodicity in a first set of peer discovery resources;
   means for determining an energy on an allocated peer discovery resource of a second set of peer discovery resources;
   means for refraining from transmitting a second peer discovery signal in the second set of peer discovery resources when the energy is greater than a threshold; and
   means for transmitting the second peer discovery signal in the second set of peer discovery resources with a second periodicity less than the first periodicity when the energy is less than the threshold.
8. The apparatus of example 7, wherein the second set of peer discovery resources are utilized once every N periods, said once every N periods being the second periodicity.
9. The apparatus of example 8, wherein a number of peer discovery resources in the second set of peer discovery resources multiplied by N is greater than or equal to a number of peer discovery resources in the first set of peer discovery resources.
10. The apparatus of example 7, wherein the threshold is based on a signal to interference plus noise ratio (SINR) required to successfully receive the second peer discovery signal.
11. The apparatus of example 10, further comprising:
   means for increasing the threshold when the required SINR increases; and
   means for decreasing the threshold when the required SINR decreases.
12. The apparatus of example 7, further comprising means for refraining from transmitting the first peer discovery signal in a subset of the first set of peer discovery resources during a period in which the second peer discovery signal is transmitted.
13. An apparatus for wireless communication, comprising:
   a processing system configured to:
      transmit a first peer discovery signal with a first periodicity in a first set of peer discovery resources;
      determine an energy on an allocated peer discovery resource of a second set of peer discovery resources;
      refrain from transmitting a second peer discovery signal in the second set of peer discovery resources when the energy is greater than a threshold; and
      transmit the second peer discovery signal in the second set of peer discovery resources with a second periodicity less than the first periodicity when the energy is less than the threshold.
14. The apparatus of example 13, wherein the second set of peer discovery resources are utilized once every N periods, said once every N periods being the second periodicity.
15. The apparatus of example 14, wherein a number of peer discovery resources in the second set of peer discovery resources multiplied by N is greater than or equal to a number of peer discovery resources in the first set of peer discovery resources.
16. The apparatus of example 13, wherein the threshold is based on a signal to interference plus noise ratio (SINR) required to successfully receive the second peer discovery signal.
17. The apparatus of example 16, wherein the processing system is further configured to:
   increase the threshold when the required SINR increases; and
   decrease the threshold when the required SINR decreases.
18. The apparatus of example 13, wherein the processing system is further configured to refrain from transmitting the first peer discovery signal in a subset of the first set of peer discovery resources during a period in which the second peer discovery signal is transmitted.
19. A computer program product, comprising:
   a computer-readable medium comprising code for:
      transmitting a first peer discovery signal with a first periodicity in a first set of peer discovery resources;
      determining an energy on an allocated peer discovery resource of a second set of peer discovery resources;
      refraining from transmitting a second peer discovery signal in the second set of peer discovery resources when the energy is greater than a threshold; and
      transmitting the second peer discovery signal in the second set of peer discovery resources with a second periodicity less than the first periodicity when the energy is less than the threshold.
20. The computer program product of example 19, wherein the second set of peer discovery resources are utilized once every N periods, said once every N periods being the second periodicity.
21. The computer program product of example 20, wherein a number of peer discovery resources in the second set of peer discovery resources multiplied by N is greater than or equal to a number of peer discovery resources in the first set of peer discovery resources.
22. The computer program product of example 19, wherein the threshold is based on a signal to interference plus noise ratio (SINR) required to successfully receive the second peer discovery signal.
23. The computer program product of example 22, wherein the computer-readable medium further comprises code for:
   increasing the threshold when the required SINR increases; and
   decreasing the threshold when the required SINR decreases.
24. The computer program product of example 19, wherein the computer-readable medium further comprises code for refraining from transmitting the first peer discovery signal in a subset of the first set of peer discovery resources during a period in which the second peer discovery signal is transmitted.

## Claims

1. A method (1000) of wireless communication, comprising:
transmitting (1002) a first peer discovery signal with a first periodicity in a first set of peer discovery resources (502);
determining (1004) an energy on a first peer discovery resource (806) of a second set of peer discovery resources (504), wherein the second set of peer discovery resources (504) are distinct from the first set of peer discovery resources (502);
refraining from transmitting a second peer discovery signal in the second set of peer discovery resources (504) when the energy on the first peer discovery resource (806) is greater than a threshold; and
transmitting the second peer discovery signal on a second peer discovery resource (810) in the second set of peer discovery resources (504) with a second periodicity less than the first periodicity when the energy is less than the threshold.

2. The method (1000) of claim 1, wherein the second set of peer discovery resources (504) are utilized once every N periods, said once every N periods being the second periodicity.

3. The method (1000) of claim 2, wherein a number of peer discovery resources in the second set of peer discovery resources (504) multiplied by N is greater than or equal to a number of peer discovery resources in the first set of peer discovery resources (502).

4. The method (1000) of claim 1, wherein the threshold is based on a signal to interference plus noise ratio, SINR required to successfully receive a second peer discovery signal.

5. The method (1000) of claim 4, further comprising:
increasing the threshold when the required SINR increases; and
decreasing the threshold when the required SINR decreases.

6. The method (1000) of claim 1, further comprising refraining from transmitting the first peer discovery signal in a subset of the first set of peer discovery resources during a period in which the second peer discovery signal is transmitted.

7. An apparatus (1100) for wireless communication, comprising:
means (1006) for transmitting a first peer discovery signal with a first periodicity in a first set of peer discovery resources (502);
means (1004) for determining an energy on a first peer discovery resource (806) of a second set of peer discovery resources (504), wherein the second set of peer discovery resources (504) are distinct from the first set of peer discovery resources (502);
means (1006) for refraining from transmitting a second peer discovery signal in the second set of peer discovery resources (504) when the energy on the first peer discovery resource (806) is greater than a threshold; and
means (1006) for transmitting the second peer discovery signal on the second peer discovery resource (810) in the second set of peer discovery resources (504) with a second periodicity less than the first periodicity when the energy is less than the threshold.

8. The apparatus (1100) of claim 7, wherein the second set of peer discovery resources (504) are utilized once every N periods, said once every N periods being the second periodicity.

9. The apparatus (1100) of claim 8, wherein a number of peer discovery resources in the second set of peer discovery resources (504) multiplied by N is greater than or equal to a number of peer discovery resources in the first set of peer discovery resources (502).

10. The apparatus (1100) of claim 7, wherein the threshold is based on a signal to interference plus noise ratio, SINR required to successfully receive a second peer discovery signal.

11. The apparatus (1100) of claim 10, further comprising:
means for increasing the threshold when the required SINR increases; and
means for decreasing the threshold when the required SINR decreases.

12. The apparatus (1100) of claim 7, further comprising means for refraining from transmitting the first peer discovery signal in a subset of the first set of peer discovery resources during a period in which the second peer discovery signal is transmitted.

13. The apparatus (1100) of claim 7, wherein the means (1006) for transmitting a first peer discovery signal, the means (1004) for determining an energy, the means (1006) for refraining from transmitting a second peer discovery and the means (1006) for transmitting the second peer discovery signal comprise a processing system.

14. A computer program comprising program instructions which when run on a computer carry out all steps of the method of anyone of claims 1 to 6.

## Patentansprüche

1. Verfahren (1000) zur drahtlosen Kommunikation, umfassend:
Aussenden (1002) eines ersten Peer-Discovery-Signals mit einer ersten Periodizität in einem ersten Satz von Peer-Discovery-Ressourcen (502);
Bestimmen (1004) einer Energie auf einer ersten Peer-Discovery-Ressource (806) eines zweiten Satzes von Peer-Discovery-Ressourcen (504), wobei der zweite Satz von Peer-Discovery-Ressourcen (504) sich von dem ersten Satz von Peer-Discovery-Ressourcen (502) unterscheidet;
Absehen von einem Aussenden eines zweiten Peer-Discovery-Signals in dem zweiten Satz von Peer-Discovery-Ressourcen (504), wenn die Energie der ersten Peer-Discovery-Ressource (806) größer als eine Schwelle ist; und
Aussenden des zweiten Peer-Discovery-Signals auf einer zweiten Peer-Discovery-Ressource (810) in dem zweiten Satz von Peer-Discovery-Ressourcen (504) mit einer zweiten Periodizität, die kleiner ist als die erste Periodizität, wenn die Energie kleiner als die Schwelle ist.

2. Verfahren (1000) gemäß Anspruch 1, wobei der zweite Satz von Peer-Discovery-Ressourcen (504) einmal alle N Perioden benutzt wird, wobei die genannten alle N Perioden die zweite Periodizität aufweisen.

3. Verfahren (1000) gemäß Anspruch 2, wobei eine Anzahl von Peer-Discovery-Ressourcen in dem zweiten Satz von Peer-Discovery-Ressourcen (504) multipliziert mit N größer oder gleich einer Anzahl von Peer-Discovery-Ressourcen in dem ersten Satz von Peer-Discovery-Ressourcen (502) ist.

4. Verfahren (1000) gemäß Anspruch 1, wobei die Schwelle auf einem Signal-zu-Störer-plus-Rauschen-Verhältnis, SINR basiert, das erforderlich ist, um ein zweites Peer-Discovery-Signal erfolgreich zu empfangen.

5. Verfahren (1000) gemäß Anspruch 4, weiterhin umfassend:
Erhöhen der Schwelle, wenn sich das erforderliche SINR erhöht; und
Verringern der Schwelle, wenn sich das erforderliche SINR verringert.

6. Verfahren (1000) gemäß Anspruch 1, weiterhin umfassend Absehen von einem Aussenden des ersten Peer-Discovery-Signals in einer Untermenge des ersten Satzes von Peer-Discovery-Ressourcen während einem Intervall, in welchem das zweite Peer-Discovery-Signal ausgesendet wird.

7. Vorrichtung (1100) zur drahtlosen Kommunikation, umfassend:
Mittel (1006) zum Aussenden eines ersten Peer-Discovery-Signals mit einer ersten Periodizität in einem ersten Satz von Peer-Discovery-Ressourcen (502);
Mittel (1004) zum Bestimmen einer Energie auf einer ersten Peer-Discovery-Ressource (806) eines zweiten Satzes von Peer-Discovery-Ressourcen (504), wobei der zweite Satz von Peer-Discovery-Ressourcen (504) sich von dem ersten Satz von Peer-Discovery-Ressourcen (502) unterscheidet;
Mittel (1006) zum Absehen von einem Aussenden eines zweiten Peer-Discovery-Signals in dem zweiten Satz von Peer-Discovery-Ressourcen (504), wenn die Energie der ersten Peer-Discovery-Ressource (806) größer als eine Schwelle ist; und
Mittel (1006) zum Aussenden des zweiten Peer-Discovery-Signals auf einer zweiten Peer-Discovery-Ressource (810) in dem zweiten Satz von Peer-Discovery-Ressourcen (504) mit einer zweiten Periodizität, die kleiner ist als die erste Periodizität, wenn die Energie kleiner als die Schwelle ist.

8. Vorrichtung (1100) gemäß Anspruch 7, wobei der zweite Satz von Peer-Discovery-Ressourcen (504) einmal alle N Perioden benutzt wird, wobei die genannten alle N Perioden die zweite Periodizität aufweisen.

9. Vorrichtung (1100) gemäß Anspruch 8, wobei eine Anzahl von Peer-Discovery-Ressourcen in dem zweiten Satz von Peer-Discovery-Ressourcen (504) multipliziert mit N größer oder gleich einer Anzahl von Peer-Discovery-Ressourcen in dem ersten Satz von Peer-Discovery-Ressourcen (502) ist.

10. Vorrichtung (1100) gemäß Anspruch 7, wobei die Schwelle auf einem Signal-zu-Störer-plus-Rauschen-Verhältnis, SINR basiert, das erforderlich ist, um ein zweites Peer-Discovery-Signal erfolgreich zu empfangen.

11. Vorrichtung (1100) gemäß Anspruch 10, weiterhin umfassend:
Mittel zum Erhöhen der Schwelle, wenn sich das erforderliche SINR erhöht; und
Mittel zum Verringern der Schwelle, wenn sich das erforderliche SINR verringert.

12. Vorrichtung (1100) gemäß Anspruch 7, weiterhin umfassend Mittel zum Absehen von einem Aussenden des ersten Peer-Discovery-Signals in einer Untermenge des ersten Satzes von Peer-Discovery-Ressourcen während einem Intervall, in welchem das zweite Peer-Discovery-Signal ausgesendet wird.

13. Vorrichtung (1100) gemäß Anspruch 7, wobei das Mittel (1006) zum Aussenden eines ersten Peer-Discovery-Signals, das Mittel (1004) zum Bestimmen einer Energie, dass Mittel (1006) zum Absehen von einem Aussenden eines zweiten Peer-Discovery-Signals und das Mittel (1006) zum Aussenden des zweiten Peer-Discovery-Signals ein Prozessorsystem umfasst.

14. Computerprogramm umfassend Programmanweisungen, die, wenn, sie auf einem Computer ausgeführt werden, alle Schritte des Verfahrens gemäß jedwedem der Ansprüche 1 bis 6 durchführen.

## Revendications

1. Procédé (1000) de communication sans fil, comprenant :
la transmission (1002) d'un premier signal de découverte de pair à une première périodicité dans un premier ensemble de ressources de découverte de pair (502) ;
la détermination (1004) d'une énergie sur une première ressource de découverte de pair (806) d'un second ensemble de ressources de découverte de pair (504), le second ensemble de ressources de découverte de pair (504) étant distinct du premier ensemble de ressources de découverte de pair (502) ;
l'abstention de transmission d'un second signal de découverte de pair dans le second ensemble de ressources de découverte de pair (504) lorsque l'énergie sur la première ressource de découverte de pair (806) est supérieure à un seuil ; et
la transmission du second signal de découverte de pair sur une seconde ressource de découverte de pair (810) dans le second ensemble de ressources de découverte de pair (504) à une seconde périodicité inférieure à la première périodicité lorsque l'énergie est inférieure au seuil.

2. Procédé (1000) selon la revendication 1, dans lequel le second ensemble de ressources de découverte de pair (504) est utilisé une fois sur N périodes, ladite une fois sur N périodes étant la seconde périodicité.

3. Procédé (1000) selon la revendication 2, dans lequel un nombre de ressources de découverte de pair dans le second ensemble de ressources de découverte de pair (504) multiplié par N est supérieur ou égal à un nombre de ressources de découverte de pair dans le premier ensemble de ressources de découverte de pair (502).

4. Procédé (1000) selon la revendication 1, dans lequel le seuil est fondé sur un rapport signal sur interférence plus bruit, SINR, requis pour recevoir avec succès un second signal de découverte de pair.

5. Procédé (1000) selon la revendication 4, comprenant en outre :
l'augmentation du seuil lorsque le SINR requis augmente ; et
la diminution du seuil lorsque le SINR requis diminue.

6. Procédé (1000) selon la revendication 1, comprenant en outre l'abstention de transmission du premier signal de découverte de pair dans un sous-ensemble du premier ensemble de ressources de découverte de pair durant une période au cours de laquelle le second signal de découverte de pair est transmis.

7. Appareil (1100) pour communication sans fil, comprenant :
des moyens (1006) pour transmettre un premier signal de découverte de pair à une première périodicité dans un premier ensemble de ressources de découverte de pair (502) ;
des moyens (1004) pour déterminer une énergie sur une première ressource de découverte de pair (806) d'un second ensemble de ressources de découverte de pair (504), le second ensemble de ressources de découverte de pair (504) étant distinct du premier ensemble de ressources de découverte de pair (502) ;
des moyens (1006) pour s'abstenir de transmettre un second signal de découverte de pair dans le second ensemble de ressources de découverte de pair (504) lorsque l'énergie sur la première ressource de découverte de pair (806) est supérieure à un seuil ; et
des moyens (1006) pour transmettre le second signal de découverte de pair sur la seconde ressource de découverte de pair (810) dans le second ensemble de ressources de découverte de pair (504) à une seconde périodicité inférieure à la première périodicité lorsque l'énergie est inférieure au seuil.

8. Appareil (1100) selon la revendication 7, dans lequel le second ensemble de ressources de découverte de pair (504) est utilisé une fois sur N périodes, ladite une fois sur N périodes étant la seconde périodicité.

9. Appareil (1100) selon la revendication 8, dans lequel un nombre de ressources de découverte de pair dans le second ensemble de ressources de découverte de pair (504) multiplié par N est supérieur ou égal à un nombre de ressources de découverte de pair dans le premier ensemble de ressources de découverte de pair (502).

10. Appareil (1100) selon la revendication 7, dans lequel le seuil est fondé sur un rapport signal sur interférence plus bruit, SINR, requis pour recevoir avec succès un second signal de découverte de pair.

11. Appareil (1100) selon la revendication 10, comprenant en outre :
des moyens pour augmenter le seuil lorsque le SINR requis augmente ; et
des moyens pour diminuer le seuil lorsque le SINR requis diminue.

12. Appareil (1100) selon la revendication 7, comprenant en outre des moyens pour s'abstenir de transmettre le premier signal de découverte de pair dans un sous-ensemble du premier ensemble de ressources de découverte de pair durant une période au cours de laquelle le second signal de découverte de pair est transmis.

13. Appareil (1100) selon la revendication 7, dans lequel les moyens (1006) pour transmettre un premier signal de découverte de pair, les moyens (1004) pour déterminer une énergie, les moyens (1006) pour s'abstenir de transmettre une seconde découverte de pair et les moyens (1006) pour transmettre le second signal de découverte de pair comprennent un système de traitement.

14. Programme d'ordinateur comprenant des instructions de programme qui, lorsqu'elles sont exécutées sur un ordinateur, réalisent toutes les étapes du procédé de l'une quelconque des revendications 1 à 6.
